# EUROPÄISCHE PATENTSCHRIFT

(11) **EP 3 028 961 B1**
(45) Veröffentlichungstag und Bekanntmachung des Hinweises auf die Patenterteilung: **18.09.2019**
(21) Anmeldenummer: 15198001.8
(22) Anmeldetag: 04.12.2015
(51) Int. Cl.: B65G 17/20, B65G 47/38, B65G 9/00

(54) **TRANSPORTTASCHE ZUM TRANSPORTIEREN EINER WARE IN EINER HÄNGEWARENFÖRDERANLAGE**
TRANSPORT BAG FOR TRANSPORTING AN OBJECT IN A CONVEYING INSTALLATION FOR SUSPENDED GOODS
SAC DE TRANSPORT POUR UNE MARCHANDISE DANS UNE INSTALLATION DE TRANSPORT DE MARCHANDISE SUSPENDUE

(30) Priorität: 04.12.2014 DE 102014224872
(43) Veröffentlichungstag der Anmeldung: 08.06.2016
(73) Patentinhaber: Vanderlande Industries B.V., 5466 RB Veghel (NL)
(72) Erfinder: Schneuing, Ralf Ferdinand, 33649 Bielefeld (DE)
(74) Vertreter: Hoffmann Eitle

(56) Entgegenhaltungen:
- EP-A1- 2 130 968
- EP-A1- 2 708 478
- DE-A1- 10 354 419
- DE-A1-102004 018 569
- DE-A1-102010 053 590
- US-A- 2 656 044
- US-A- 2 961 091

## Beschreibung

### TECHNISCHES GEBIET

Die vorliegende Erfindung betrifft eine Transporttasche zum Transportieren einer Ware in einer Hängewarenförderanlage. Sie umfasst ein Aufhängeelement, durch das die Transporttasche an der Hängewarenförderanlage aufhängbar ist, einen Taschenkörper mit einer Vorderwand, einer Hinterwand und dazwischen einem Boden, wobei die Vorderwand eine Öffnung aufweist, und ein Hebelelement, über das der Taschenkörper an dem Aufhängeelement hängt und durch das der Taschenkörper zwischen zumindest zwei Stellungen, in denen die Vorderwand und die Hinterwand unterschiedliche relative vertikale Positionen zueinander einnehmen, umstellbar ist.

### STAND DER TECHNIK

Übliche Hängewarenförderanlagen dienen der Förderung von Hängeware, wozu insbesondere Kleidungsstücke zählen, die über einen Bügel hängend gefördert werden können. Solche Förderanlagen unterscheiden sich grundsätzlich von sogenannten Liegewarenförderanlagen, die keine hängenden Kleidungsstücke oder anderen Gegenstände, sondern solche Gegenstände fördern, die auf einem Untergrund liegen. Es besteht jedoch das Bedürfnis, auch Liegeware mit Hängewarenförderanlagen transportieren zu können, beispielsweise Kleidungsstücke, die nicht sinnvoll auf einem Bügel transportierbar sind, oder Accessoires, aber auch grundsätzlich jede andere Liegeware, häufig jedoch eher kleine Gegenstände.

Um dies zu ermöglichen, existieren im Stand der Technik viele verschiedene Vorschläge für Transporttaschen, die über ein Aufhängeelement an einer Hängewarenförderanlage aufgehängt und von der Hängewarenförderanlage gefördert werden können. In diese Transporttaschen können dann diejenigen Artikel eingebracht werden, die sich grundsätzlich nicht hängend fördern lassen.

Derartige Transporttaschen sind beispielsweise aus der deutschen Patentanmeldung DE 103 54 419 A1 bekannt, welche eine Transporttasche nach dem Oberbegriff des Anspruchs 1 offenbart. Überwiegend werden Transporttaschen, insbesondere die aus DE 103 54 419 A1 bekannte, manuell be- und entladen, was einen der Förderleistung der Förderanlage entsprechenden Personalaufwand erfordert.

Für eine fortschreitende Automatisierung der Hängewarenförderanlage besteht seit langem das Bedürfnis, die Transporttasche möglichst automatisch entladen zu können. Auch hierfür existieren im Stand der Technik einzelne Lösungsvorschläge. Beispielsweise schlägt die europäische Patentanmeldung EP 2 709 935 A1 vor, eine Seite der Transporttasche zum Entladen teilweise von der Transporttasche zu lösen, so dass die in der Transporttasche befindliche Ware herausfallen kann. Ein ähnlicher Ansatz wird auch in der europäischen Patentanmeldung EP 2 130 968 A1 verfolgt.

Diese Systeme zum automatischen Entladen einer Transporttasche erfordern jedoch relativ komplizierte Vorrichtungen und Mechanismen, um die Transporttasche so wiederherzustellen, dass sie zum Transport von Ware geeignet ist. Wenn die Transporttaschen nicht manuell wieder geschlossen werden, ist ein großer apparativer Aufwand erforderlich, der immer auch mit einer seiner Komplexität entsprechend hohen Fehleranfälligkeit einhergeht.

### DARSTELLUNG DER ERFINDUNG

Vor dem Hintergrund des bekannten Stands der Technik liegt die Aufgabe der vorliegenden Erfindung darin, eine Transporttasche zum Transportieren einer Ware in einer Hängewarenförderanlage gemäß dem obigen technischen Gebiet bereitzustellen, die so konstruiert ist, dass ein automatisches Entleeren der Transporttasche leicht und zuverlässig möglich ist, während gleichzeitig ohne großen apparativen Aufwand automatisch ein Zustand wiederhergestellt werden kann, in dem die Transporttasche zum Transportieren der Ware geeignet ist.

Die Aufgabe wird durch die Transporttasche gemäß Anspruch 1 gelöst. Vorteilhafte Weiterentwicklungen der Erfindung ergeben sich aus den Unteransprüchen.

Die erfindungsgemäße Transporttasche zum Transportieren einer Ware in einer Hängewarenförderanlage umfasst ein Aufhängeelement, durch das die Transporttasche an der Hängewarenförderanlage aufhängbar ist, einen Taschenkörper mit einer Vorderwand, einer Hinterwand und dazwischen einem Boden, wobei die Vorderwand eine Öffnung aufweist, und ein Hebelelement, über das der Taschenkörper an dem Aufhängeelement hängt und durch das der Taschenkörper zwischen zumindest zwei Stellungen, in denen die Vorderwand und die Hinterwand unterschiedliche relative vertikale Positionen zueinander einnehmen, umstellbar ist. Die erfindungsgemäße Transporttasche ist dadurch gekennzeichnet, dass die Öffnung derart positioniert und ausgestaltet ist, dass sie in einer ersten der zumindest zwei Stellungen des Taschenkörpers einen zum sicheren Aufnehmen der Ware im Taschenkörper geeigneten Abstand von einem tiefsten Punkt des Taschenkörpers hat und in einer zweiten der zumindest zwei Stellungen des Taschenkörpers an den tiefsten Punkt des Taschenkörpers heranreicht, so dass die Ware in der zweiten Stellung mittels Schwerkraft durch die Öffnung aus dem Taschenkörper herausgleiten oder herausfallen kann.

Bei dem Aufhängeelement kann es sich insbesondere um einen bekannten Haken handeln, mit dem die Transporttasche an der Hängewarenförderanlage aufgehängt werden kann. Das Aufhängeelement nimmt dabei die Gewichtskraft der Transporttasche samt der darin befindlichen Ware auf, zumindest jedoch einen großen Teil davon. Das Aufhängeelement kann auch mehrteilig ausgestaltet sein, wobei der Einfachheit halber ein einfacher Haken bevorzugt wird.

Der Taschenkörper mit der Vorderwand, der Hinterwand und dem dazwischen befindlichen Boden kann insbesondere so ausgestaltet sein, dass Vorderwand, Boden und Hinterwand kontinuierlich ineinander übergehen und Teil eines einzigen, bevorzugt flächigen, Gegenstands sind. Beispielsweise kann der Taschenkörper insgesamt durch eine durchgehende Textilbahn, Folienbahn oder dergleichen gebildet sein. Es wird jedoch bevorzugt, dass zwischen der Vorderwand und dem Boden sowie zwischen der Hinterwand und dem Boden strukturelle Unterschiede bestehen, insbesondere hinsichtlich ihrer Steifigkeit und Verformbarkeit sowie ihrer Festigkeit. Derartige Unterschiede können auch zwischen der Vorderwand und der Hinterwand bestehen, insbesondere wenn die Hinterwand bei der Benutzung des Taschenkörpers zum Transportieren der Ware stärker belastet wird als die Vorderwand. Der Taschenkörper kann selbstverständlich auch weitere Element, insbesondere Seitenwände, Gelenke oder Stabilisationselemente, aufweisen und kann nicht nur einstückig, sondern auch mehrstückig ausgeführt sein. In einer Ausführungsform, in der die Vorderwand über ein Gelenk mit der Hinterwand verbunden ist, bildet das Gelenk mithin den Boden des Taschenkörpers.

Es ist möglich, dass die Vorderwand, der Boden und/oder die Hinterwand über Drähte, Seile, Schnüre, Kabel, Streben oder dergleichen am Hebelelement angebracht sind, so dass sich die vorderwand und/oder die Hinterwand nicht bis zum Hebelelement erstrecken müssen, um die Funktion des Taschenkörpers zum Aufnehmen einer Ware zu erfüllen. Alternativ können Vorderwand und/oder Hinterwand zumindest teilweise die genannten Drähte, Seile, Schnüre, Kabel, Streben oder dergleichen aufweisen, d.h. diese Elemente können als Teil der Vorderwand und/oder Hinterwand angesehen werden.

Die in der Vorderwand befindliche Öffnung ist erfindungsgemäß dazu geeignet, einen Durchtritt der von der Transporttasche zu transportierenden Ware zu erlauben. Bei der Öffnung handelt es sich also nicht nur um eine Sichtöffnung, die aus durchsichtigem Material oder einem Netz erstellt werden könnte und die zu transportierende Ware nicht durchlässt, sondern um eine ausreichend bemessene Ausnehmung in der Vorderwand, durch welche die Ware aus der Transporttasche heraus- oder in die Transporttasche hineingelangen kann. Dabei ist unerheblich, ob und welche Strukturen die Vorderwand neben der Öffnung noch aufweist.

Unter einem Hebelelement ist im vorliegenden Zusammenhang ein gegenüber dem Aufhängeelement kippbares oder einen Hebelarm bildendes Element zu verstehen. Das Hebelelement kann auch mehrteilig ausgeführt sein. Das Hebelelement kann dabei durch eine einzelne Strebe, mehrere nebeneinander angeordnete Streben oder auch eine Platte gebildet sein und auch alle anderen technischen Umsetzungen eines Hebelelements sind im Sinne der vorliegenden Erfindung grundsätzlich umfasst.

Der Taschenkörper hängt über das Hebelelement an dem Aufhängeelement. Dies bedeutet mit anderen Worten, dass das Aufhängeelement die Gewichtskraft des Taschenkörpers durch das Hebelelement übertragen bekommt. In der Kraftflussrichtung befindet sich das Hebelelement zwischen dem Aufhängeelement und dem Taschenkörper, was jedoch nicht ausschließt, dass weitere Elemente zwischen dem Taschenkörper und dem Hebelelement oder zwischen dem Hebelelement und dem Aufhängeelement vorhanden sein können.

Durch das Hebelelement kann der Taschenkörper zwischen zumindest zwei Stellungen umgestellt werden. Dies bedeutet, dass der Taschenkörper von zumindest einer ersten Stellung in zumindest eine zweite Stellung und von der zumindest einen zweiten Stellung auch wieder zurück in die zumindest eine erste Stellung umgestellt werden kann. Das Umstellen zwischen zwei Stellungen umfasst also insbesondere ein Hin- und Her-Umstellen, nicht nur ein einmaliges Verändern der Stellung des Taschenkörpers. Dabei nehmen die Vorderwand und die Hinterwand unterschiedliche relative vertikale Positionen zueinander ein, wobei die vertikalen Positionen der Vorderwand und der Hinterwand in einem frei an dem Aufhängeelement hängenden Zustand des Taschenkörpers zu verstehen sind. Mit anderen Worten kann beispielsweise auf der Vorderwand ein erster Punkt definiert werden, der in der ersten der zumindest zwei Stellungen dieselbe vertikale Position wie ein zweiter Punkt, der auf der Hinterwand definiert ist, hat. Durch das Umstellen des Taschenkörpers aus der ersten Stellung in die zweite Stellung nimmt der Taschenkörper eine Stellung ein, in der der auf der Vorderwand definierte erste Punkt nicht mehr dieselbe vertikale Position hat wie der auf der Hinterwand definierte zweite Punkt, sondern beispielsweise tiefer angeordnet ist. Beispielsweise kann die Oberkante der Vorderwand in der ersten Stellung oberhalb der Oberkante der Hinterwand angeordnet sein, während die Oberkante der Hinterwand in der zweiten Stellung oberhalb der Oberkante der Vorderwand angeordnet ist.

Dass die Öffnung in der ersten Stellung einen zum sicheren Aufnehmen der Ware im Taschenkörper geeigneten Abstand von einem tiefsten Punkt des Taschenkörpers hat, bedeutet mit anderen Worten, dass die Ware in dieser ersten Stellung nicht durch die Öffnung aus dem Taschenkörper herausfallen kann. Der Abstand zwischen der Öffnung, genauer gesagt dem unteren Rand der Öffnung, und dem tiefsten Punkt des Taschenkörpers, genauer gesagt dem tiefsten Punkt des Inneren des Taschenkörpers, also des Abschnitts, in dem die Ware aufgenommen wird, setzt dabei eine Grenze für die maximale Ausdehnung der Ware, die durch die Transporttasche transportierbar ist.

Je nach zu transportierender Ware kann die Transporttasche unterschiedlich dimensioniert sein, wobei es immer möglich ist, die Öffnung, den Taschenkörper insgesamt sowie auch das Hebelelement so auszuführen, dass die Ware zuverlässig in der Transporttasche transportiert und dieselbe Ware automatisch entladen werden kann. Dies bedeutet, dass nicht jede Transporttasche für jede Ware geeignet ist, aber, dass sich für jede Ware, die üblicherweise durch Hängewarenförderanlagen gefördert werden soll, eine geeignet bemessene und konfigurierte Transporttasche entwickeln lässt.

Der tiefste Punkt des Taschenkörpers und der Abstand zwischen dem tiefsten Punkt und der Öffnung in der Vorderwand werden in einem frei am Aufhängeelement hängenden Zustand der Transporttasche bestimmt. Die Form des Taschenkörpers und damit auch der Abstand zwischen dem tiefsten Punkt und der Öffnung in der Vorderwand kann grundsätzlich von der in dem Taschenkörper befindlichen Ware leicht beeinflusst werden. Er ist daher so zu wählen, dass er bei jeder für den Transport in dem Taschenkörper vorgesehenen Ware ausreichend groß ist, so dass die Ware nicht in der ersten Stellung des Taschenkörpers durch die Öffnung aus dem Taschenkörper herausfällt. Als Beispiele für einen geeigneten Abstand werden zumindest die halbe vertikale Ausdehnung der in dem Taschenkörper beförderten Ware, das heißt insbesondere der Ware, für die der Taschenkörper und damit die Transporttasche ausgelegt ist, bevorzugt zumindest zwei Drittel der vertikalen Ausdehnung der in dem Taschenkörper beförderten Ware, weiter bevorzugt zumindest die gesamte vertikale Ausdehnung der in dem Taschenkörper beförderten Ware herangezogen.

In der zweiten Stellung reicht die Öffnung der Vorderwand an den tiefsten Punkt des Taschenkörpers heran, so dass die Ware dann mittels Schwerkraft durch die Öffnung aus dem Taschenkörper herausgleiten kann. Mit anderen Worten befindet sich die Öffnung im tiefsten Punkt des Taschenkörpers oder zumindest sehr nah daran, so dass in dem Taschenkörper befindliche Ware die Öffnung erreicht und durch die Öffnung herausgleitet, herausrutscht oder herausfällt. Um dies zu erleichtern, kann der Taschenkörper optional auch mit einer das Herausgleiten der Ware durch die Öffnung fördernden Beschichtung versehen oder in einer dies fördernden Form ausgestaltet sein.

Durch die erfindungsgemäße Transporttasche ist es möglich, ein automatisches Entladen der Transporttasche in einer Hängewarenförderanlage durchzuführen, wobei auch die Wiederherstellung des Zustandes, in dem die Transporttasche zum Transport der Ware geeignet ist, leicht automatisch erzielt werden kann, nämlich indem das Hebelelement aus der zweiten Stellung zurück in die erste Stellung umgestellt wird.

Bevorzugt ist die Transporttasche so ausgestaltet, dass die Schwerkraft den Taschenkörper in die erste der zumindest zwei Stellungen drängt und ein Umstellen des Taschenkörpers in die zweite der zumindest zwei Stellungen eine zusätzliche Kraft erfordert, insbesondere wenn Ware in dem Taschenkörper aufgenommen ist.

Dies bedeutet, dass der Taschenkörper ohne äußere Einwirkung so an dem Hebelelement hängt, dass er sich in der ersten Stellung befindet, in der die Öffnung den Abstand vom tiefsten Punkt des Taschenkörpers hat und die Ware sicher im Taschenkörper aufgenommen ist. Der Taschenkörper ist also ohne äußere Einwirkung dazu geeignet, Ware zu transportieren.

Erst durch Einwirkung einer zusätzlichen Kraft von außen, beispielsweise durch eine Kurvenführung oder ein an der Transporttasche befindliches Betätigungselement, wird der Taschenkörper in die zweite Stellung umgestellt. Diese bevorzugte Eigenschaft der Transporttasche kann beispielsweise dadurch erzielt werden, indem die Gewichtsverteilung des Taschenkörpers und/oder die Ausgestaltung, insbesondere Längenverteilung, des Hebelelements geeignet gewählt werden. So kann der apparative Aufwand bei der Hängeförderanlage insgesamt reduziert werden, weil ein sicheres Aufnehmen der Ware im Taschenkörper über der gesamte Förderstrecke der Förderanlage ohne äußere Einwirkung auf die Transporttasche gewährleistet ist und nur an der Entladestation die apparativen Maßnahmen ergriffen werden müssen, um die Umstellung des Taschenkörpers zum Entleeren vorzunehmen.

In einer bevorzugten Ausführungsform ist das Hebelelement derart ausgestaltet, dass eine erste Achse, die bevorzugt horizontal ausgerichtet ist und um welche das Hebelelement relativ zum Aufhängeelement kippbar ist, näher an der Vorderwand des Taschenkörpers als an der Hinterwand des Taschenkörpers angeordnet ist. Genauer gesagt ist diese erste Achse in Vorwärts-Rückwärts-Richtung näher an einem vorderen Ende der Vorderwand als an einem hinteren Ende der Hinterwand angeordnet. Durch diese Ausgestaltung des Hebelelements kann ohne weitere Mittel erzielt werden, dass die Transporttasche durch Schwerkraft in der ersten Stellung gehalten wird. Denn bei dieser besonders bevorzugten Ausgestaltung des Hebelelements und des daran angebrachten Taschenkörpers übt aufgrund der Hebelgesetze die Hinterwand ein größeres Drehmoment auf das Hebelelement aus als die Vorderwand, so dass das Hebelelement, insbesondere ein Rahmengestell, wie es weiter unten beschrieben wird, ohne zusätzliche äußere Krafteinwirkung automatisch die erste Stellung einnimmt, in der die Öffnung vom tiefsten Punkt des Taschenkörpers beabstandet ist. Alternativ kann auch eine Feder oder dergleichen vorgesehen sein, um das Hebelelement entsprechend vorzuspannen und im Grundzustand der Transporttasche in seine erste Stellung zu drängen.

In einer bevorzugten Ausführungsform ist das Hebelelement ein Rahmengestell, über das der Taschenkörper an dem Aufhängeelement hängt. Bei einem solchen Rahmengestell kann es sich beispielsweise um einen Drahtrahmen, einen andersartigen Metallrahmen, einen Holzrahmen oder einen Kunststoffrahmen handeln. Der Rahmen kann dabei auch geschlossen sein, das heißt die Form einer Platte einnehmen, und kann verschiedenste Formen haben.

Bevorzugt wird dabei, dass der Taschenkörper derart über das Rahmengestell am Aufhängeelement hängt, dass die Vorderwand, die Hinterwand oder die Vorderwand und die Hinterwand an dem Rahmengestell angebracht sind. Dies kann durch aus dem Stand der Technik bekannte Maßnahmen erfolgen. Alternativ kann die Transporttasche jedoch auch über möglicherweise vorhandene Seitenwände oder einzelne Verbindungsstreben an dem Rahmengestell angeordnet sein.

In einer bevorzugten Ausführungsform ist das Rahmengestell relativ zum Aufhängeelement um eine erste Achse kippbar, die bevorzugt horizontal ausgerichtet ist. Das Rahmengestell kann dabei beispielsweise über ein Gelenk mit dem Aufhängeelement verbunden sein, so dass ein Kippen des Taschenkörpers gegenüber dem Aufhängeelement ermöglicht wird. Grundsätzlich kann das Rahmengestell allerdings auch so ausgeführt sein, dass es über eine Torsionsfeder, beispielsweise einen elastisch um seine Längsachse verformbaren Draht, oder dergleichen fest mit dem Aufhängeelement verbunden ist, so dass ein Umstellen zwischen den zwei Stellungen des Taschenkörpers durch Überwinden der jeweiligen Torsionskraft möglich ist. Dadurch, dass das Rahmengestell um die erste Achse kippbar ist, kann der Taschenkörper zwischen den zumindest zwei Stellungen umgestellt werden, wobei die zuvor beschriebene Ausführungsform mit Gelenk gegenüber derjenigen mit Torsionsfeder bevorzugt wird, weil das Gelenk weniger schnell ermüdet und verschleißt als die Torsionsfeder.

In einer bevorzugten Ausführungsform der Transporttasche weist das Rahmengestell eine rechteckige Außenkontur mit zwei Langseiten und zwei Kurzseiten auf, wobei die Vorderwand und die Hinterwand des Taschenkörpers jeweils an einer der Langseiten des Rahmengestells angebracht sind und wobei das Rahmengestell zusätzlich einen Verbindungssteg parallel zu den Langseiten aufweist, an denen das Rahmgestell mit dem Aufhängeelement wirkverbunden ist, wobei die erste Achse durch den Verbindungssteg verläuft.

Unter einer rechteckigen Außenkontur ist in diesem Zusammenhang nicht nur eine streng mathematisch korrekte Rechteckform gemeint, sondern auch eine Außenkontur mit abgerundeten Ecken oder gekrümmten Seiten. Es wird jedoch bevorzugt, dass die zwei Langseiten länger sind als die zwei Kurzseiten, um eine möglichst breite Vorderwand und Hinterwand zu ermöglichen, was zur Eignung der Transporttasche zum Transportieren relativ großer Warenstücke beiträgt. Lange Kurzseiten führen hingegen zu einem größeren Unterschied der relativen vertikalen Positionen der Vorderwand und Hinterwand beim Umstellen zwischen der ersten Stellung und der zweiten Stellung. Der zusätzliche Verbindungssteg verläuft dabei im Wesentlichen parallel, das heißt unter Berücksichtigung relevanter Fertigungstoleranzen, zu den Langseiten. Eine leicht windschiefe Ausrichtung des Verbindungsstegs gegenüber den Langseiten hat unter Umständen keine große Auswirkung auf die Funktionsfähigkeit der Transporttasche und soll daher ebenfalls grundsätzlich umfasst sein. Bei größeren Abweichungen von der Parallelität zwischen der zusätzlichen Strebe und den Langseiten des Rahmengestells wird es jedoch unter Umständen erschwert, einen vollautomatischen Betrieb der Förderanlage durchzuführen. Daher wird für eine besonders präzise Transporttasche eine möglichst genau parallele Ausführung des Verbindungsstegs angestrebt.

Unter einer Wirkverbindung zwischen dem Rahmengestell und dem Aufhängeelement kann beispielsweise das bereits zuvor angesprochene Gelenk verstanden werden, über welches das Rahmengestell an dem Aufhängeelement hängt. Durch das Gelenk kann das Rahmengestell gut gegenüber dem Aufhängeelement gekippt werden, wobei auch die oben bereits erwähnte Alternative einer Torsionsverbindung in Betracht kommt.

Mit Vorteil ist eine Größe der Öffnung in der Vorderwand größer oder gleich einer Größe des Bodens, bevorzugt ist die Größe der Öffnung dabei gleich der Größe des Bodens. Mit der Größe der Öffnung und der Größe des Bodens geht bevorzugt auch eine gleiche Form der Öffnung und des Bodens einher. Mit anderen Worten wird besonders bevorzugt, dass sowohl die Größe als auch die Form von Öffnung und Boden gleich sind. Es kann jedoch auch Anwendungsfälle der erfindungsgemäßen Transporttasche geben, in denen die Größe der Öffnung nur in einer Richtung, beispielsweise quer zur Förderrichtung oder quer zum Hebelelement größer oder gleich der Größe des Bodens sein soll, während die Größe der Öffnung senkrecht hierzu auch kleiner als die entsprechende Größe des Bodens sein kann.

Dies ermöglicht, dass auf dem Boden der Transporttasche ruhende Ware besonders prozesssicher durch die Öffnung ausgegeben werden kann, weil die Ware nicht an den Rändern der Öffnung hängenbleiben kann und es unmittelbar bereits beim Beladen auffällt, wenn die Ware nicht durch die Öffnung passt.

Bevorzugt weist der Boden des Taschenkörpers eine höhere Steifigkeit auf als die Vorderwand und die Hinterwand. Dies bedeutet, dass sich der Boden nicht so leicht außerhalb der Erstreckungsrichtung der jeweiligen Wand, insbesondere senkrecht dazu, verformen lässt wie die Vorderwand und die Hinterwand. Dies führt dazu, dass die Transporttasche ohne weitere Maßnahmen klar definierte Übergänge zwischen der Vorderwand und dem Boden sowie der Hinterwand und dem Boden aufweist. Solche Übergänge und damit eine klare Unterteilung des Taschenkörpers in Vorderwand, Boden und Hinterwand machen die Bewegungsabläufe im Taschenkörper beim Umstellen des Hebelelements leichter voraussagbar und weniger abhängig von der im Taschenkörper befindlichen Ware. Dies führt zu erhöhter Prozesssicherheit beim Betrieb der Förderanlage. Insbesondere kann der Boden in dieser Ausführungsform parallel zum Hebelelement gekippt werden und damit eine definierte schräge Ebene bilden, über welche die Ware durch die Öffnung aus dem Taschenkörper herausgleiten oder fallen kann, wenn sich der Taschenkörper in der zweiten Stellung befindet. Andererseits kann durch den mit höherer Steifigkeit versehenen Boden in der ersten Stellung des Taschenkörpers zuverlässiger verhindert werden, dass die Ware unbeabsichtigt durch die Öffnung aus dem Taschenkörper herausfällt.

In einer weiter bevorzugten Ausführungsform weist der Boden des Taschenkörpers zumindest einen ersten Bodenbereich einer ersten Steifigkeit und einen zweiten Bodenbereich einer zweiten, höheren Steifigkeit auf. Besonders bevorzugt verjüngt sich dabei der erste Bodenbereich zur Vorderwand des Taschenkörpers hin, insbesondere dreieckförmig.

Dadurch, dass der Boden verschiedensteife Bereiche aufweist, kann ein Gleitweg der Ware aus dem Taschenkörper durch die Öffnung leichter beeinflusst und vorhergesagt werden. Insbesondere kann bei einer dreieckförmigen Verjüngung des weniger steifen Bodenbereichs zur Vorderwand hin, das heißt auf die Öffnung zu, ein ähnlicher Effekt wie bei einem Trichter erzielt werden, denn die Ware wird sich eher im Bereich des weniger steifen Bodenbereichs aufhalten, weil dieser stärker durchhängt und die Ware damit eine energetisch günstigere Lage einnimmt.

Mit Vorteil ist die Vorderwand und/oder die Hinterwand und/oder der Boden aus einem Textil oder einer Folie ausgebildet. Damit sollen alle möglichen Textil- und Folienarten umfasst sein. Vorteile von Textil oder Folie im Zusammenhang mit der vorliegenden Erfindung liegen insbesondere in der preisgünstigen und umfangreichen Verfügbarkeit, was eine besonders preisgünstige Herstellung der Transporttasche ermöglicht. Dabei können sowohl einzelne Teile des Taschenkörpers, insbesondere also Vorderwand, Hinterwand oder Boden, separat oder mehrere Teile zusammen aus einem speziellen Textil oder einer Folie ausgebildet sein. Die Festigkeit in Erstreckungsrichtung der jeweiligen Wand oder die Steifigkeit außerhalb der Erstreckungsrichtung, insbesondere senkrecht dazu, der einzelnen Abschnitte des Taschenkörpers können dabei auch variieren, indem verschiedene Textilien oder Folien, verschiedenen Stärken derselben Textilien oder Folien oder Verstärkungselemente verwendet werden.

Schließlich wird bevorzugt, dass zwischen dem Hebelelement und dem Aufhängeelement eine gelenkige Verbindung ausgebildet ist, wodurch das Hebelelement um eine vertikale zweite Achse relativ zum Aufhängeelement drehbar ist. Das Gelenk zum Drehen des Hebelelements um die vertikale zweite Achse kann einstückig mit einem Gelenk zum Drehen/Kippen des Hebelelements um die horizontale erste Achse ausgeführt sein, es kann aber auch zusätzlich dazu vorgesehen sein. Durch eine solche gelenkige Verbindung kann es leichter sein, die Transporttasche manuell zu beladen oder in der Förderanlage zu bewegen. Hierbei wird jedoch weiter bevorzugt, dass die gelenkige Verbindung zum Drehen des Hebelelements um die vertikale zweite Achse selektiv arretierbar ist. Somit können ungewollte Drehungen der Transporttasche um die vertikale Achse unterbunden werden.

Weitere Merkmale und Vorteile der Erfindung ergeben sich aus der nachfolgenden Figurenbeschreibung und der Gesamtheit der Patentansprüche.

### KURZE FIGURENBESCHREIBUNG

Fig. 1 zeigt eine perspektivische Darstellung einer bevorzugten Transporttasche in ihrer ersten Stellung.
Fig. 2 zeigt die Transporttasche aus Fig. 1 in ihrer zweiten Stellung.
Fig. 3 zeigt eine Vorderansicht der Transporttasche aus den Figuren 1 und 2 in ihrer zweiten Stellung.

### WEGE ZUR AUSFÜHRUNG DER ERFINDUNG

Die in den Zeichnungen dargestellte bevorzugte Transporttasche weist ein Rahmengestell 1, ein am Rahmengestell 1 festgelegtes Aufhängeelement 2 sowie einen vom Rahmengestell 1 nach unten herunterhängenden Taschenkörper 3 auf. Das Rahmengestell 1 umfasst einen umlaufenden Drahtrahmen 4, der rechteckförmig ausgebildet ist. Zwischen zwei Kurzseiten 5 und 6 sind zwei Verbindungsstege 7 und 8 angeordnet. Der erste Verbindungssteg 7 ist dabei parallel zu und mittig zwischen zwei Langseiten 9 und 10 des Drahtrahmens 4 angeordnet. Der zweite Verbindungssteg 8 befindet sich im Zwischenraum zwischen der hinteren ersten Langseite 9 und dem Verbindungssteg 7. Somit ist der zweite Verbindungssteg 8 näher an der vorderen zweiten Langseite 10 als an der hinteren ersten Langseite 9 angeordnet.

Auf den Verbindungssteg 8 ist ein Tragkörper 11 aufgeschoben. Der Tragkörper 11 besitzt dabei eine durchgehende Bohrung, die als Drehgelenk für den Verbindungssteg 8 wirkt. An der Oberseite des Tragkörpers 11 ist das Aufhängeelement 2 angeordnet, welches im dargestellten Ausführungsbeispiel als Haken ausgebildet ist. Mit Hilfe dieses Aufhängeelements 2 kann die Transporttasche an eine Hängewarenförderanlage aufgehängt werden.

Die Förderanlage dient dabei dazu, Produkte wie Kleidungsstücke, Bücher oder andere größenmäßig ähnliche Gegenstände zu sortieren und beispielsweise für Versandzwecke in vorbestimmte Zusammenstellungen zu bringen. Solche Förderanlagen besitzen in der Regel umlaufende Ketten oder Transportbänder, an denen eine Vielzahl von Aufhängeelementen 2 aufgehängt werden können.

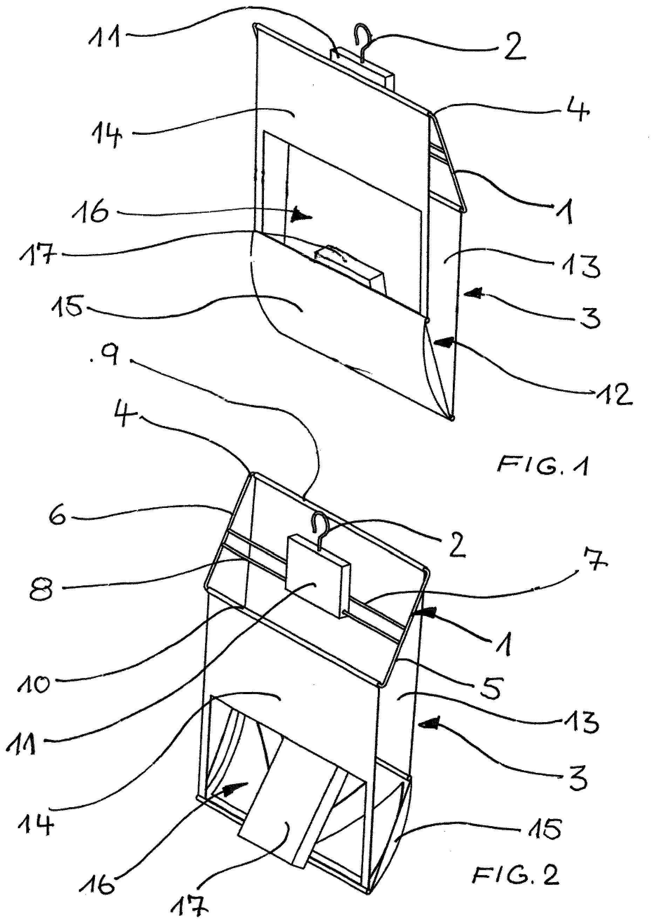

Durch die Anordnung des Tragkörpers 11 mit dem Aufhängeelement 2 asymmetrisch zum Schwerpunkt der Transporttasche und insbesondere des Rahmengestells 1 befindet sich die erfindungsgemäße Transporttasche bei ihrer Bewegung entlang der Förderanlage in der in Fig. 1 dargestellten ersten Stellung, die ihre Transportposition darstellt.

An dem Rahmengestell 1 hängt ein Taschenkörper 3. Der Taschenkörper 3 weist im Wesentlichen eine Hinterwand 13, eine Vorderwand 14 und einen Vorderwand und Hinterwand 13 verbindenden Boden 15 auf. In der Vorderwand 14 ist dabei eine Öffnung 16 eingebracht. Optional kann der Taschenkörper 3 dabei auch noch eine oder mehrere Seitenwände aufweisen, die sich zwischen der Vorderwand 14 und der Hinterwand 13 vom Boden 15 aus nach oben erstrecken können. Die Vorderwand 14 und die Hinterwand 13 haben im Wesentlichen dieselbe Länge und sind beide am Rahmengestell 1 als Beispiel eines Hebelelements angebracht. Dadurch wird eine Schrägstellung des Rahmengestells 1 auf den Taschenkörper übertragen und die relative vertikale Position der Vorderwand 14 und Hinterwand 13 zueinander lässt sich durch Umstellen des Rahmengestells 1 zwischen zwei verschiedenen Kippstellungen am Tragkörper 11 verändern.

Wie aus der Fig. 1 ersichtlich ist, zeichnet sich die Transportstellung der erfindungsgemäßen Transporttasche dadurch aus, dass eine Unterkante der Öffnung 16 in der Vorderwand 14 von einem tiefsten Punkt des Taschenkörpers 3 so weit beabstandet ist, dass eine Ware 17 im Taschenkörper 3 sicher aufgenommen werden kann. Es bildet sich somit ein Transportraum 12, in dem die Ware 17 transportiert werden kann.

Beispielsweise wenn die Transporttasche zu einer Entnahmestation bewegt wird, kann die Transporttasche durch in den Zeichnungen nicht näher dargestellte Hilfsmittel in die in Fig. 2 dargestellte zweite Stellung, in der sich die Transporttasche in einer Entleerungsposition befindet, gebracht werden. Bei diesen Hilfsmitteln kann es sich beispielsweise um eine Kurvenführung handeln, die das Rahmengestell 1 aus der ersten Stellung aus Fig. 1 in eine zweite Stellung aus Fig. 2 kippt. Alternativ sind auch andere Hilfsmittel nutzbar, die das Rahmengestell 1 umstellen können, beispielsweise ein Betätigungselement, mit dem das Rahmengestell gekippt werden kann.

Die zweite Stellung zeichnet sich dadurch aus, dass das Rahmengestell so ausgerichtet ist, dass sich nunmehr die vordere zweite Langseite 10 in einer niedrigeren Position befindet als die hintere erste Langseite 9. Durch das Kippen des Drahtrahmens 4 wird gleichzeitig eine Kippen des Bodens 15 des Taschenkörpers 3 herbeigeführt. Dies führt dazu, dass eine Verbindungskante zwischen Boden 15 und Vorderwand 14 abgesenkt wird, wodurch die Ware 17 durch die Öffnung 16 aus dem Taschenkörper 3 herausgleiten kann. Denn in dieser Position reicht die Öffnung 16 an den tiefsten Punkt des Taschenkörpers 3 heran und die Ware 17 wird im Bereich der Vorderwand 14 nicht gehalten, sondern rutscht aus dem Taschenkörper heraus und kann auf ein Transportband oder in einen Sammelbehälter oder dergleichen fallen, das/der sich unterhalb der Transporttasche befinden kann.

Nachdem die Ware 17 die Transporttasche verlassen hat, kann die Absenkung der vorderen zweiten Langseite 10 des Rahmengestells 1 aufgehoben und der Taschenkörper 3 automatisch wieder in seine in Fig. 1 darstellte erste Stellung zurückgestellt werden. Daraufhin kann die Transporttasche auf ihrem Weg entlang der umlaufenden Förderanlage erneut mit einer Ware 17 bestückt werden, ohne dass die Transporttasche aufwendig in eine Transportstellung umgebaut werden muss, wie es beispielsweise im Stand der Technik erforderlich ist.

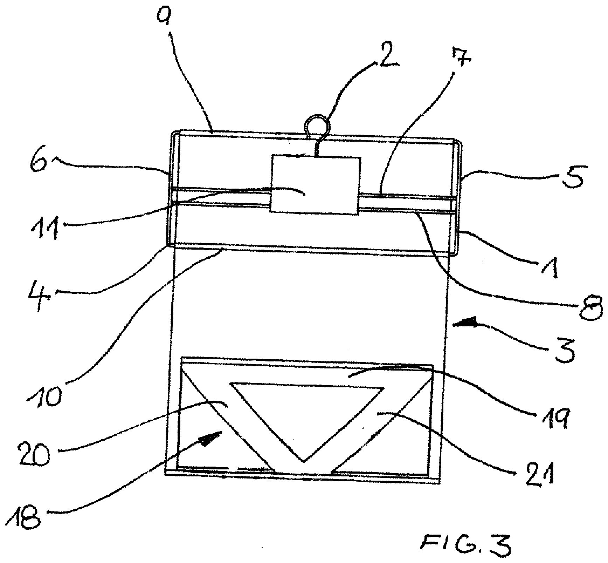

Das Herausfallen der Ware 17 kann entsprechend einer vorteilhaften Weiterbildung der Erfindung dadurch unterstützt werden, dass, wie in Fig. 3 gezeigt, der Boden 15 des Taschenkörpers mindestens zwei Bereiche unterschiedlich großer Materialsteifigkeit aufweist. Der Boden weist dabei bevorzugt einen dreieckförmigen ersten Bereich 18 geringerer Materialsteifigkeit auf, der einen Quersteg 19 an einer zur Hinterwand 13 gerichteten Rückseite des Bodens 15 und zwei, beispielsweise im Wesentlichen rechtwinklig, aufeinander zu verlaufende und an einer Vorderseite des Bodens 15 miteinander verbundene und an ihrem gegenüberliegenden Ende mit dem Quersteg 19 verbundene Faltstege 20 und 21 aufweist. Außerhalb des ersten Bereichs 18 weist der Boden 15 einen zweiten Bereich größerer Materialsteifigkeit als derjenigen des ersten Bereichs 18 auf. Optional kann auch innerhalb des ersten Bereichs 18 geringerer Materialsteifigkeit ein Bereich größerer Materialsteifigkeit vorliegen und es ist auch denkbar, dass die Materialsteifigkeit des Bodens 15 noch feiner unterteilt oder kontinuierlich verlaufend ausgebildet wird. Hierfür kommen einerseits inhärente Materialeigenschaften in Frage, andererseits kann die geringere Materialsteifigkeit auch durch eine dünnere Ausführung oder eine mechanische Beeinflussung, beispielsweise Falten oder dergleichen erzielt werden.

Durch die geringere Materialsteifigkeit des Quersteges 19 sowie der Fallstege 20 und 21 bildet sich der Boden 15 in der zweiten Stellung des Taschenkörpers 3 trichterförmig aus, wobei der zur Vorderwand 14 gerichtete mittige Bodenbereich die niedrigste Stellung des Trichters einnimmt Die im Taschenkörper 3 befindliche Ware 17 wird somit unterstützt durch die besondere Trichterform des Bodens 15 mittig aus dem Taschenkörper 3 durch die Öffnung 16 herausfallen.

Insbesondere bei einer relativ hohen Transportgeschwindigkeit der Förderanlage kann durch die geschilderte Maßnahme die Präzision der Entleerung der Transporttasche gesteigert werden.

Nachdem die Ware 17 durch die Öffnung 16 in einen unter der Transporttasche befindlichen nicht näher dargestellten Sammelbehälter oder auf ein Transportband oder dergleichen gefallen ist, kann das Rahmengestell 1, wie oben bereits geschildert, in seine erste Stellung zurückkehren, so dass neue Ware 17 im Taschenkörper 3 sicher aufgenommen und transportiert werden kann.

## Patentansprüche

1. Transporttasche zum Transportieren einer Ware (17) in einer Hängewarenförderanlage umfassend
ein Aufhängeelement (2), durch das die Transporttasche an der Hängewarenförderanlage aufhängbar ist,
einen Taschenkörper (3) mit einer Vorderwand (14), einer Hinterwand (13) und dazwischen einem Boden (15),
wobei die Vorderwand (14) eine Öffnung (16) aufweist, und ein Hebelelement (1),
über das der Taschenkörper (3) an dem Aufhängeelement (2) hängt und
durch das der Taschenkörper (3) zwischen zumindest zwei Stellungen, in denen die Vorderwand (14) und die Hinterwand (13) unterschiedliche relative vertikale Positionen zueinander einnehmen, umstellbar ist,
wobei die Öffnung (16) derart positioniert und ausgestaltet ist, dass sie in einer ersten der zumindest zwei Stellungen des Taschenkörpers (3) einen zum sicheren Aufnehmen der Ware im Taschenkörper (3) geeigneten Abstand von einem tiefsten Punkt des Taschenkörpers (3) hat, **dadurch gekennzeichnet, dass** in einer zweiten der zumindest zwei Stellungen des Taschenkörpers (3) die Öffnung (16) an den tiefsten Punkt des Taschenkörpers (3) heranreicht,
so dass die Ware (17) in der zweiten Stellung mittels Schwerkraft durch die Öffnung (16) aus dem Taschenkörper (3) herausgleiten kann.

2. Transporttasche nach Anspruch 1,
wobei die Transporttasche so ausgestaltet ist, dass die Schwerkraft den Taschenkörper (3) in die erste der zumindest zwei Stellungen drängt und ein Umstellen des Taschenkörpers (3) in die zweite der zumindest zwei Stellungen eine zusätzliche Kraft erfordert, insbesondere wenn eine Ware (17) in dem Taschenkörper (3) aufgenommen ist.

3. Transporttasche nach einem der vorhergehenden Ansprüche,
wobei das Hebelelement (1) relativ zum Aufhängeelement (2) um eine, bevorzugt horizontal ausgerichtete, erste Achse kippbar ist, und
wobei die erste Achse bevorzugt näher an der Vorderwand (14) des Taschenkörpers (3) als an der Hinterwand (13) des Taschenkörpers (3) angeordnet ist.

4. Transporttasche nach Anspruch 3,
wobei das Hebelelement (1) ein Rahmengestell ist, über das der Taschenkörper (3) an dem Aufhängeelement (2) hängt,
bevorzugt indem die Vorderwand (14) und/oder die Hinterwand (13) an dem Rahmengestell (1) angebracht ist,
wobei das Rahmengestell (1) relativ zum Aufhängeelement (2) um die erste Achse kippbar ist,
wodurch der Taschenkörper (3) zwischen den zumindest zwei Stellungen umstellbar ist.

5. Transporttasche nach Anspruch 4,
wobei das Rahmengestell (1) eine rechteckige Außenkontur mit zwei Langseiten (9, 10) und zwei Kurzseiten (5, 6) aufweist,
wobei die Vorderwand (14) und die Hinterwand (13) des Taschenkörpers (3) jeweils an einer der Langseiten (9, 10) des Rahmengestells (1) angebracht ist und
wobei das Rahmengestell (1) zusätzlich einen Verbindungssteg (8) parallel zu den Langseiten (9, 10) aufweist, an dem das Rahmengestell (1) mit dem Aufhängeelement (2) wirkverbunden ist,
wobei die erste Achse durch den Verbindungssteg (8) verläuft.

6. Transporttasche nach einem der vorhergehenden Ansprüche,
wobei eine Größe der Öffnung (16) größer oder gleich, einer Größe des Bodens (15) ist,
wobei bevorzugt die Größe der Öffnung (16) gleich der Größe des Bodens (15) ist.

7. Transporttasche nach einem der vorhergehenden Ansprüche,
wobei der Boden (15) des Taschenkörpers (3) eine höhere Steifigkeit aufweist als die Vorderwand (14) und die Hinterwand (13) .

8. Transporttasche nach einem der vorhergehenden Ansprüche,
wobei der Boden (15) des Taschenkörpers (3) zumindest einen ersten Bodenbereich (18-21) einer ersten Steifigkeit und einen zweiten Bodenbereich einer zweiten, höheren Steifigkeit aufweist,
insbesondere wobei sich der erste Bodenbereich zur Vorderwand (14) des Taschenkörpers (3) hin, bevorzugt dreieckförmig, verjüngt.

9. Transporttasche nach einem der vorhergehenden Ansprüche,
wobei die Vorderwand (14) und/oder die Hinterwand (13) und/oder der Boden (15) aus einem Textil oder einer Folie ausgebildet ist.

10. Transporttasche nach einem der vorhergehenden Ansprüche,
wobei zwischen dem Hebelelement (1) und dem Aufhängeelement (2) eine gelenkige Verbindung (11) ausgebildet ist,
wodurch das Hebelelement (1) um eine vertikale zweite Achse relativ zum Aufhängeelement (2) drehbar ist.

## Claims

1. Transport bag for transporting an item of goods (17) in a system for transporting suspended goods, comprising
a suspending member (2) by which the transport bag can be suspended from the system for transporting suspended goods,
a bag-body (3) having a front wall (14), a rear wall (13) and, therebetween, a floor (15),
the front wall (14) having an opening (16), and a raising member (1)
by means of which the bag-body (3) hangs from the suspending member (2) and
by which the bag-body (3) can be changed over between at least two positions in which the front wall (14) and the rear wall (13) assume different vertical positions relative to one another,
the opening (16) being positioned and designed in such a way that,
in a first of the at least two positions of the bag-body (3), the opening (16) is at a distance from a lowest point of the bag-body (3) suitable for the item of goods to be safely received in the bag-body (3), **characterised in that**, in a second of the at least two positions of the bag-body (3), the opening (16) reaches down to the lowest point of the bag-body (3),
the item of goods (17) thus being able to slide out of bag-body (3), through the opening (16), by gravity in the second position.

2. Transport bag according to claim 1, wherein the transport bag is so designed that the force of gravity compels the bag-body (3) to assume the first of the at least two positions and a changeover of the bag-body (3) to the second of the at least two positions requires additional force, particularly if there is an item of goods (17) received in the bag-body (3).

3. Transport bag according to one of the preceding claims, wherein the raising member (1) can be tilted relative to the suspending member (2) on a first, preferably horizontally aligned, axis, and
wherein the first axis is preferably arranged closer to the front wall (14) of the bag-body (3) than to the rear wall (13) of the bag-body (3).

4. Transport bag according to claim 3,
wherein the raising member (1) is a frame structure by means of which the bag-body (3) is hung from the suspending member (2),
preferably by attaching the front wall (14) and/or the rear wall (13) to the frame structure (1),
the frame structure (1) being able to be tiled relative to the suspending member (2) on the first axis,
whereby the bag-body (3) can be changed over between the at least two positions.

5. Transport bag according to claim 4, wherein the frame structure (1) is rectangular in outline with two long sides (9, 10) and two short ends (5, 6),
the rear wall (13) and the front wall (14) of the bag-body (3) being attached to respective ones of the long sides (9, 10) of the frame structure (1), and
the frame structure (1) having in addition a connecting cross-piece (8) parallel to the long sides (9, 10) on which the frame structure (1) is operatively connected to the suspending member (2),
the first axis extending through the connecting cross-piece (8) .

6. Transport bag according to one of the preceding claims,
wherein a size of the opening (16) is larger than or the same as a size of the floor (15),
the size of the opening (16) preferably being the same as the size of the floor (15).

7. Transport bag according to one of the preceding claims, wherein the floor (15) of the bag-body (3) is of greater stiffness than the front wall (14) and the rear wall (13) .

8. Transport bag according to one of the preceding claims,
wherein the floor (15) of the bag-body (3) has at least one floor region (18-21) of a first stiffness and a second floor region of a second, higher, stiffness, with,
in particular, the first floor region tapering, preferably in a triangular shape, in the direction of the front wall (14) of the bag-body (3).

9. Transport bag according to one of the preceding claims,
wherein the front wall (14) and/or the rear wall (13) and/or the floor (15) are formed from a textile or a film.

10. Transport bag according to one of the preceding claims,
wherein a connection (11) by a joint is formed between the raising member (1) and the suspending member (2),
whereby the raising member (1) can be rotated relative to the suspending member (2) on a second, vertical, axis.

## Revendications

1. Sac de transport destiné à transporter une marchandise (17) dans une installation de transport de marchandise suspendue comprenant
un élément de suspension (2), au moyen duquel le sac de transport peut être suspendu à l'installation de transport de marchandise suspendue,
un corps de sac (3) avec une paroi avant (14), une paroi arrière (13) et, entre celles-ci, un fond (15),
dans lequel la paroi avant (14) présente une ouverture (16), et
un élément levier (1),
par l'intermédiaire duquel le corps de sac (3) est suspendu à l'élément de suspension (2) et
au moyen duquel le corps de sac (3) peut être déplacé entre au moins deux positions, dans lesquelles la paroi avant (14) et la paroi arrière (13) occupent des positions verticales relatives différentes l'une par rapport à l'autre,
dans lequel
l'ouverture (16) est positionnée et conçue de telle sorte que
dans une première des au moins deux positions du corps de sac (3), elle présente un écart, par rapport à un point le plus profond du corps de sac (3), adapté au logement sûr de la marchandise dans le corps de sac (3), **caractérisé en ce que**
dans une deuxième des au moins deux positions du corps de sac (3), l'ouverture (16) atteint le point le plus profond du corps de sac (3),
de sorte que la marchandise (17), dans la deuxième position, peut glisser hors du corps de sac (3) à travers l'ouverture (16) sous l'effet de la force de gravité.

2. Sac de transport selon la revendication 1,
dans lequel le sac de transport est conçu de sorte que la force de gravité pousse le corps de sac (3) dans la première des au moins deux positions et un déplacement du corps de sac (3) dans la deuxième des au moins deux positions nécessite une force supplémentaire, en particulier lorsqu'une marchandise (17) est logée dans le corps de sac (3).

3. Sac de transport selon l'une quelconque des revendications précédentes,
dans lequel l'élément levier (1) peut basculer par rapport à l'élément de suspension (2) autour d'un premier axe de préférence orienté horizontalement, et
dans lequel le premier axe est de préférence agencé plus près de la paroi avant (14) du corps de sac (3) que de la paroi arrière (13) du corps de sac (3).

4. Sac de transport selon la revendication 3,
dans lequel l'élément levier (1) est un châssis, par l'intermédiaire duquel le corps de sac (3) est suspendu à l'élément de suspension (2),
de préférence du fait que la paroi avant (14) et/ou la paroi arrière (13) sont montées sur le châssis (1),
dans lequel le châssis (1) peut basculer par rapport à l'élément de suspension (2) autour du premier axe,
ce qui a pour effet que le corps de sac (3) peut être déplacé entre les au moins deux positions.

5. Sac de transport selon la revendication 4,
dans lequel le châssis (1) présente un contour extérieur rectangulaire avec deux côtés longs (9, 10) et deux côtés courts (5, 6),
dans lequel la paroi avant (14) et la paroi arrière (13) du corps de sac (3) sont montées respectivement sur un des côtés longs (9, 10) du châssis (1) et
dans lequel le châssis (1) présente en plus un élément de liaison (8) parallèle aux côtés longs (9, 10), sur lequel le châssis (1) est en liaison fonctionnelle avec l'élément de suspension (2),
dans lequel le premier axe s'étend à travers l'élément de liaison (8).

6. Sac de transport selon l'une quelconque des revendications précédentes,
dans lequel une grandeur de l'ouverture (16) est supérieure ou égale à une grandeur du fond (15),
dans lequel de préférence la grandeur de l'ouverture (16) est identique à la grandeur du fond (15).

7. Sac de transport selon l'une quelconque des revendications précédentes,
dans lequel le fond (15) du corps de sac (3) présente une rigidité supérieure à celle de la paroi avant (14) et de la paroi arrière (13).

8. Sac de transport selon l'une quelconque des revendications précédentes,
dans lequel le fond (15) du corps de sac (3) présente au moins une première zone de fond (18-21) d'une première rigidité et une deuxième zone de fond d'une deuxième rigidité plus élevée,
en particulier dans lequel la première zone de fond s'amincit en direction de la paroi avant (14) du corps de sac (3), de préférence en forme de triangle.

9. Sac de transport selon l'une quelconque des revendications précédentes,
dans lequel la paroi avant (14) et/ou la paroi arrière (13) et/ou le fond (15) sont réalisés à partir d'un textile ou d'une feuille.

10. Sac de transport selon l'une quelconque des revendications précédentes,
dans lequel une liaison articulée (11) est réalisée entre l'élément levier (1) et l'élément de suspension (2),
ce qui a pour effet que l'élément levier (1) peut tourner par rapport à l'élément de suspension (2) autour d'un deuxième axe vertical.
